# EUROPÄISCHE PATENTSCHRIFT

(11) **EP 2 893 981 B1**
(45) Veröffentlichungstag und Bekanntmachung des Hinweises auf die Patenterteilung: **20.01.2021**
(21) Anmeldenummer: 15150294.5
(22) Anmeldetag: 07.01.2015
(51) Int. Cl.: B04C 5/04, B04C 5/103, B04C 5/107, B04C 5/13, B04C 5/14

(54) **Schlammabscheider**
Sludge separator
Séparateur de boue

(30) Priorität: 09.01.2014 CH 202014
(43) Veröffentlichungstag der Anmeldung: 15.07.2015
(73) Patentinhaber: IMI Hydronic Engineering Switzerland AG, 4414 Füllinsdorf (CH)
(72) Erfinder: Bobbert, Markus, 4125 Riehen (CH); Schläpfer, Gian, 4410 Liestal (CH); Scherrer, Alain, 4132 Muttenz (CH); Andersen, Asger, 79585 Steinen (DE); Thesing, Christian, 79713 Bad Säckingen (DE)
(74) Vertreter: Zacco Sweden AB

(56) Entgegenhaltungen:
- DE-A1-102009 005 157
- DE-B- 1 107 367
- FR-A- 1 248 898
- US-A- 2 378 632
- US-A- 2 918 139
- US-A1- 2008 250 765

## Beschreibung

Die vorliegende Erfindung betrifft einen Schlammabscheider gemäss dem Oberbegriff des unabhängigen Patentanspruchs 1.

Zur Abscheidung von in einem Flüssigkeitsstrom mitgeführten Feststoffpartikeln werden unter anderem auch nach dem Zyklon-Prinzip arbeitende Schlammabscheider eingesetzt. Ein Schlammabscheider dieser Art ist z.B. in der internationalen Patentanmeldung WO 2009/122127 A1 beschrieben. Dieser bekannte Schlammabscheider umfasst einen topfartigen Abscheidebehälter mit einem im oberen Behälterbereich angeordneten Einlass zur Zufuhr von Flüssigkeit in den Abscheidebehälter und einem ebenfalls im oberen Behälterbereich angeordneten Auslass zur Abfuhr der Flüssigkeit aus dem Abscheidebehälter. Über den Einlass und den Auslass kann der Schlammabscheider in eine Flüssigkeit führende Leitung, z:B. einer Warmwasserheizungsanlage, eingebaut werden. Im Inneren des Abscheidebehälters ist koaxial ein nach unten offenes Rohr angeordnet. Der Auslass ist kommunizierend mit dem Innenraum des Rohrs verbunden, der Einlass mündet in den ringförmigen Zwischenraum zwischen der Behälterwand und dem Rohr. Der Einlass und der Auslass sind so angeordnet, dass in den Abscheidebehälter eingeführte Flüssigkeit in einer zyklonartigen Bewegung entlang der Behälterwand abwärts fliesst und dann innerhalb der zyklonartig abwärts fliessenden Flüssigkeit aufwärts durch das Rohr zum Auslass strömt. Durch die Zyklon-Wirkung ausgeschiedene Feststoffpartikel sinken der Behälterwand entlang nach unten in einen am unteren Behälterende vorgesehenen Schlammabsetzraum.

Die DE 10 2009 005 157 A1 offenbart einen ähnlichen Zyklonabscheider, bei dem der Einlass und der Auslass an bezüglich der Behälterachse diametral gegenüberliegenden Seiten des Abscheidebehälters angeordnet sind. Im Abscheidebehälter sind Strömungsumlenkmittel angeordnet, welche durch den Einlass in den Abscheidebehälter einströmende Flüssigkeit seitlich der Behälterwand entlang und schräg nach unten umlenken.

Durch die vorliegende Erfindung soll ein Schlammabscheider der gattungsgemässen Art so verbessert werden, dass er hinsichtlich Wirkungsgrad und Druckverlust optimal ist, wobei gleichzeitig eine möglichst kompakte und kostengünstige Bauweise erreicht werden soll.

Die der Erfindung zugrundeliegende Aufgabe wird erfindungsgemäss durch einen Schlammabscheider gelöst, wie er durch die Merkmale des unabhängigen Patentanspruchs 1 spezifiziert ist. Weitere vorteilhafte Aspekte ergeben sich aus den Merkmalen der abhängigen Patentansprüche.

In seiner grundlegenden Ausführungsform umfasst der erfindungsgemässe Schlammabscheider einen eine seitliche Behälterwand und eine Behälterachse aufweisenden Abscheidebehälter und einen Einlass zur Zufuhr von Flüssigkeit in den Abscheidebehälter sowie einen Auslass zur Abfuhr der Flüssigkeit aus dem Abscheidebehälter. Der Schlammabscheider ist so ausgebildet, dass in den Abscheidebehälter eingeführte Flüssigkeit in einer zyklonartigen Bewegung entlang der Behälterwand abwärts fliesst und dann innerhalb der zyklonartig abwärts fliessenden Flüssigkeit aufwärts zum Auslass strömt. Der Einlass und der Auslass sind an bezüglich der Behälterachse diametral gegenüberliegenden Seiten des Abscheidebehälters angeordnet. Im Abscheidebehälter sind Strömungsumlenkmittel angeordnet, welche durch den Einlass in den Abscheidebehälter einströmende Flüssigkeit seitlich der Behälterwand entlang und schräg nach unten umlenken. Die Strömungsumlenkmittel weisen erfindungsgemäss einen Bypass-Kanal auf, durch den ein Teil der Flüssigkeit direkt vom Einlass zum Auslass fliessen kann.

Die diametral gegenüberliegende Anordnung des Einlasses und des Auslasses erleichtert den Einbau des Schlammabscheiders in eine Flüssigkeitsleitung. Durch den Einsatz der gesonderten Strömungsumlenkmittel wird einerseits eine intensive zyklonartige Flüssigkeitsströmung erreicht und anderseits wird der Druckverlust im Schlammabscheider minimiert. Durch die verbesserte zyklonartige Flüssigkeitsströmung wird wiederum eine effizientere Abscheidung von Feststoffpartikeln erreicht. Durch den Bypass-Kanal kann der Druckverlust im erfindungsgemässen Schlammabscheider noch weiter reduziert werden, ohne dass die Abscheidungswirkung im selben Masse abnimmt.

Zweckmässigerweise weisen die Strömungsumlenkmittel einen Auslasskanal auf, der einen achsnahen Bereich des Innenraums des Abscheidebehälters mit dem Auslass verbindet. Dieses Merkmal verbessert die Führung der abströmenden Flüssigkeit.

Weiters ist es zweckmässig, wenn die Strömungsumlenkmittel zusammen mit der Behälterwand einen Strömungskanal bilden, der sich vom Einlass weg schräg nach unten windet. Dieses Merkmal verbessert die Führung der einströmenden Flüssigkeit.

Zweckmässigerweise sind die Strömungsumlenkmittel durch ein im Abscheidebehälter angeordnetes Einsatzteil gebildet. Diese Ausbildung vereinfacht die Herstellung des erfindungsgemässen Schlammabscheiders.

Mit Vorteil weist der Abscheidebehälter in seinem unteren Bereich einen strömungsberuhigten Schlammabsetzraum auf. Dies erleichtert die Sedimentation der Feststoffpartikel.

Bei einer vorteilhaften Ausführungsvariante ist im Abscheidebehälter unterhalb der Strömungsumlenkmittel und oberhalb des Schlammabsetzraums ein Zwischenboden mit mindestens einer peripheren Öffnung angeordnet. Der Schlamm setzt sich bei dieser Ausführungsvariante auf dem Zwischenboden ab und gelangt dann durch die periphere Öffnung bzw. Öffnungen in den darunterliegenden Absetzraum, von wo er dann z.B. durch ein Ablassventil entnommen werden kann.

Bei einer zweckmässigen Ausführungsvariante weisen die Strömungsumlenkmittel ein zur Behälterachse des Abscheidebehälters im Wesentlichen koaxiales, mit dem Auslass kommunizierendes Abfuhrrohr auf. Die Anwesenheit eines solchen Abfuhrrohrs ist insbesondere bei relativ langen bzw. hohen Abscheidebehältern von Vorteil, weil dadurch die Ausbildung einer effizienten zyklonartigen Strömung begünstigt wird.

Vorteilhafterweise ist der Innendurchmesser des Abscheidebehälters 1,2 bis 3,0, vorzugsweise 1,8 bis 2,6, mal so gross wie die lichte Weite des Einlasses. Weiters ist es vorteilhaft, wenn die von einem Zwischenboden bzw. bei Fehlen eines solchen vom Behälterboden jeweils bis zum obersten Niveau des Innenquerschnitts des Einlasses gemessene Innenhöhe des Abscheidebehälters 2 bis 6, vorzugsweise 3 bis 5, mal so gross ist wie die lichte Weite des Einlasses. Ferner ist es vorteilhaft, wenn der Abstand zwischen einem Zwischenboden des Abscheidebehälters bzw., falls kein Zwischenboden vorhanden ist, zwischen dem Behälterboden einerseits und den Strömungsumlenkmitteln, d.h. deren achsnahen Eintrittsöffnung für abströmende Flüssigkeit, anderseits mindestens so gross ist wie 2/3 der lichten Weite des Einlasses. Mit diesen Abmessungsverhältnissen des Schlammabscheiders wird die Ausbildung einer besonders effektiven zyklonartigen Strömung im Abscheidebehälter und damit eine maximale Abscheidungswirkung erzielt.

Im Folgenden wird der erfindungsgemässe Schlammabscheider unter Bezugnahme auf die beigefügten Zeichnungen anhand von Ausführungsbeispielen detaillierter beschrieben. Es zeigen:
- Fig. 1: - eine Ansicht von oben auf ein erstes Ausführungsbeispiel des erfindungsgemässen Schlammabscheiders;
- Fig. 2: - einen Längs- bzw. Vertikalschnitt des Schlammabscheiders nach der Linie II-II der Fig. 1;
- Fig. 3: - eine teilweise aufgeschnittene perspektivische Ansicht des Schlammabscheiders der Fig. 1;
- Fig. 4: - einen Längsschnitt analog Fig. 2 durch ein zweites Ausführungsbeispiel des Schlammabscheiders;
- Fig. 5: - einen Längsschnitt analog Fig. 2 durch ein drittes Ausführungsbeispiel des Schlammabscheiders;
- Fig. 6-8: - drei Ansichten eines Einsatzteils des Schlammabscheiders von Fig. 2 von verschiedenen Seiten und
- Fig. 9-12: - vier Varianten eines Zwischenbodens des Schlammabscheiders.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen. Die relativen Angaben "oben", "unten", "seitlich" etc. beziehen sich auf die in den Figuren dargestellte typische Einbaulage des erfindungsgemässen Schlammabscheiders im praktischen Einsatz.

Unter Schlamm werden in einem Flüssigkeitsstrom mitgeführte, z.B. suspendierte, Feststoffpartikel verstanden. Demzufolge ist unter einem Schlammabscheider im Sinne der Erfindung eine Vorrichtung zum Abscheiden von Feststoffpartikeln aus einem Flüssigkeitsstrom zu verstehen. Im Folgenden wird nur der kürzere Begriff Schlammabscheider verwendet.

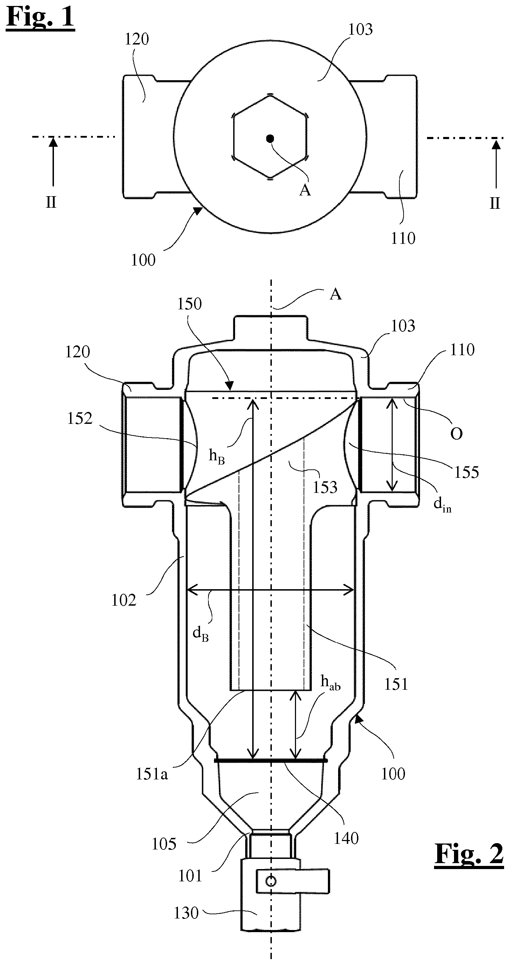

Die in den Figuren 1-3 dargestellte Ausführungsform eines erfindungsgemässen Schlammabscheiders weist einen topfförmigen Abscheidebehälter 100 mit einem Behälterboden 101, einer Behälterseitenwand 102, einem Behälterdeckel 103 und einer Behälterachse A auf. Der Abscheidebehälter 100 ist über den grössten Teil seiner Höhe im Wesentlichen zylinderförmig ausgebildet und verjüngt sich in seinem unteren Bereich im Wesentlichen (hier z.B. abgestuft) konisch.

In seinem obersten Bereich unterhalb des (abnehmbaren) Behälterdeckels 103 weist der Abscheidebehälter 100 einen stutzenförmigen Einlass 110 und einen ebenso stutzenförmigen Auslass 120 auf. Der Einlauf 110 und der Auslauf 120 sind bezüglich der Behälterachse A an diametral gegenüberliegenden Seiten des Abscheidebehälters 100 angeordnet und gegenseitig koaxial ausgerichtet. Im Behälterboden 101 ist ein Ablassventil 130 eingesetzt.

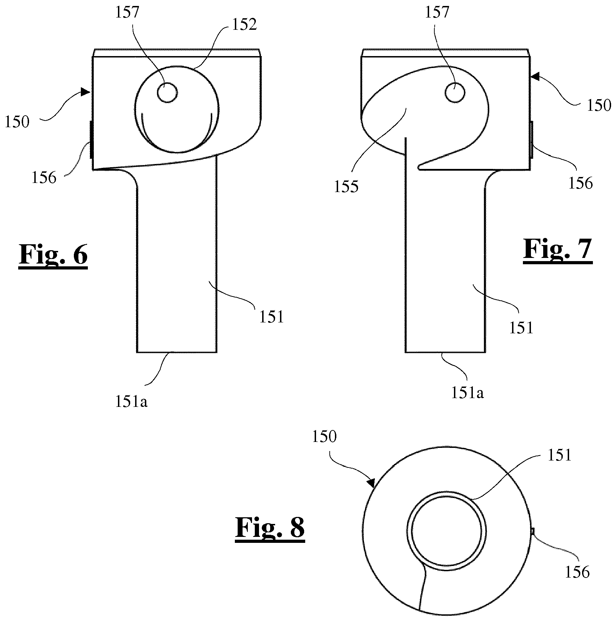

Auf der Höhe des Einlasses 110 und des Auslasses 120 ist im Abscheidebehälter 100 ein Einsatzteil 150 angeordnet, welches nach unten eine Verlängerung in Form eines zur Behälterachse A koaxialen Abfuhrrohrs 151 besitzt. Das Einsatzteil 150 kann typischerweise als Kunststoffspritzgussteil ausgebildet sein. Es ist im Abscheidebehälter 100 über Positioniermittel 156 (siehe Figuren 6-8) örtlich festgelegt.

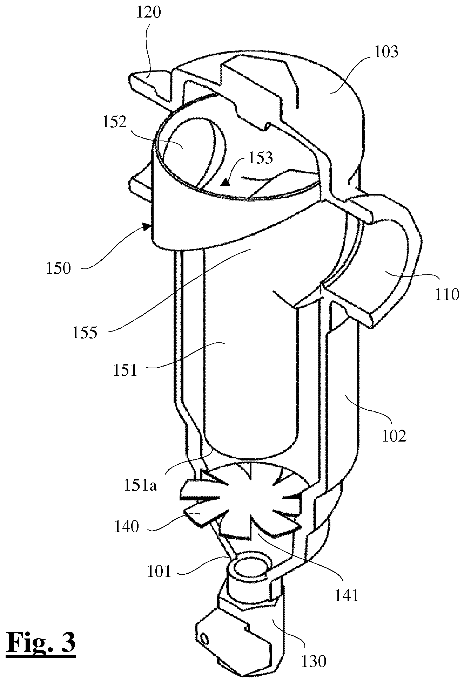

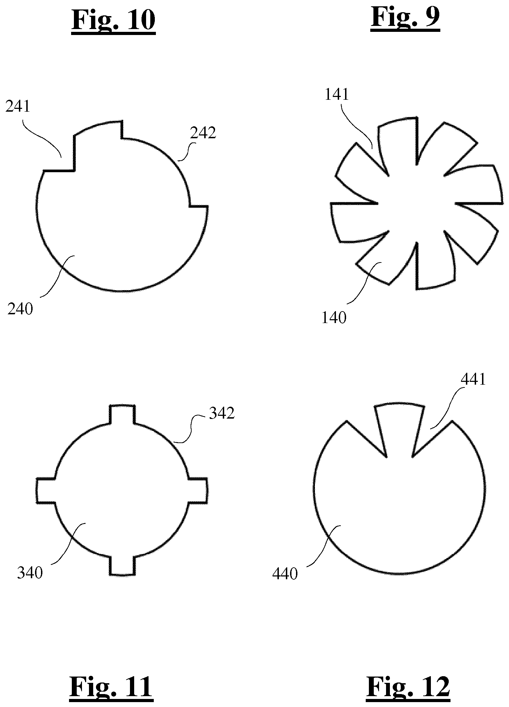

Zwischen dem unteren, offenen Ende bzw. der Einlassöffnung 151a des Abfuhrrohrs 151 und dem Behälterboden 101 befindet sich ein plattenförmiger Zwischenboden 140, der an seiner Peripherie durch mehrere Öffnungen 141 durchbrochen ist (Figuren 3 und 9).

Das Einsatzteil 150 ist innen hohl ausgebildet und besitzt eine seitliche Austrittsöffnung 152, welche sich direkt vor dem Auslass 120 befindet und dessen Weite entspricht. Umgekehrt mündet das Abfuhrrohr 151 in den Innenraum des Einsatzteils 150, so dass zwischen der Einlassöffnung 151a des Abfuhrrohrs 151 und der seitlichen Austrittsöffnung 152 ein durchgehender Auslasskanal 153 besteht.

An seiner Aussenseite ist am Einsatzteil 150 ein durch die Behälterwand 102 begrenzter Strömungskanal 155 ausgebildet. Dieser beginnt unmittelbar beim Einlass 110 und windet sich etwa um den halben Umfang des Einsatzteils 150 herum schräg nach unten, bis er dann zwischen der Behälterwand 102 und dem Abfuhrrohr 151 in den Innenraum des Abscheidebehälters 100 ausmündet.

Zur Verdeutlichung ist das Einsatzteil 150 in den Figuren 6-8 separat dargestellt. Fig. 6 zeigt eine Seitenansicht des Einsatzteils aus Richtung des Auslasses, Fig. 7 eine Seitenansicht aus Richtung des Einlasses. Die Fig. 8 zeigt eine Ansicht von unten des Einsatzteils.

Im praktischen Einsatz wird der Schlammabscheider in eine Flüssigkeit führende Leitung eingebaut. Dabei kann es sich typischerweise um eine Haushaltswasserleitung handeln. Die Flüssigkeit gelangt durch den Einlass 110 in den Abscheidebehälter 100. Vom Einlass 110 weg wird die Flüssigkeit durch das Einsatzteil 150 bzw. dessen Strömungskanal 155 in einem sanften Bogen an der Behälterwand 102 entlang schräg nach unten in den Behälterinnenraum geleitet, wobei eine zyklonartige Strömungsbewegung in der Nähe der Peripherie des Abscheidebehälters 100 bzw. um das Abfuhrrohr 151 herum entsteht. Das Einsatzteil 150 bildet also Strömungsumlenkungsmittel für die einströmende Flüssigkeit. Durch die sanfte graduelle Umlenkung der einströmenden Flüssigkeit mittels des Einsatzteils 150 wird einerseits eine optimale zyklonartige Strömungsbewegung erzeugt und anderseits der Druckabfall minimiert.

Durch die Zyklonwirkung scheiden die in der Flüssigkeit mitgeführten Feststoffpartikel hauptsächlich in der Nähe der Behälterwand 102 aus und setzen sich am Zwischenboden 140 ab. Die Flüssigkeit strömt dann achsnahe durch das Abfuhrrohr 151 nach oben in den oberen Teil des Einsatzteils 150 und von diesem durch die Austrittsöffnung 152 weiter in den Auslass 120.

Zwischen dem Boden 101 des Abscheidebehälters 100 und dem Zwischenboden 140 befindet sich ein strömungsberuhigter Schlammabsetzraum 105. Die auf dem Zwischenboden 140 sedimentierten Feststoffpartikel werden von der Flüssigkeitsströmung durch die peripheren Öffnungen 141 des Zwischenbodens 140 in den Schlammabsetzraum 105 gespült. Der abgesetzte Schlamm kann durch das Ablassventil 130 aus dem Schlammabsetzraum 105 abgeführt werden.

Im Bereich des Einlasses 110 weist die Wand des Einsatzteils eine relativ kleine Bypass-Öffnung 157 auf (Figuren 6 und 7), welche den Innenraum des Einsatzteils 150 mit seinem Aussenraum verbindet. Durch diese Bypass-Öffnung 157 kann ein Teil der durch den Einlass 110 eintretenden Flüssigkeit direkt zum Auslass 120 strömen. Die Bypass-Öffnung 157 bildet somit einen Bypass-Kanal für die Flüssigkeit. Die Bypass-Öffnung 157 ist im Verhältnis zur lichten Weite des Einlasses 110 hinreichend klein bemessen, so dass nur etwa 5-10% der Flüssigkeit durch den Bypass-Kanal strömen kann. Durch diese verhältnismässig geringfügige Bypass-Strömung wird aber der Druckverlust im Schlammabscheider deutlich reduziert, ohne dass dabei die Abscheidungswirkung substantiell beeinträchtigt wird.

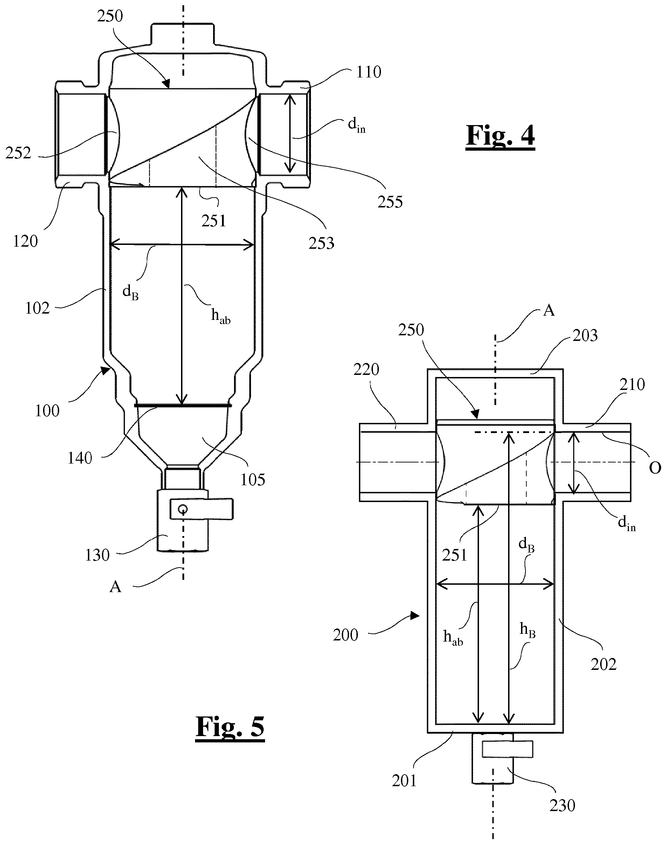

In den Figuren 4 und 5 sind zwei abgewandelte Ausführungsbeispiele des erfindungsgemässen Schlammabscheiders dargestellt.

Der Schlammabscheider der Fig. 4 unterscheidet sich vom Schlammabscheider der Figuren 1-3 lediglich dadurch, dass das Einsatzteil 250 kein Abfuhrrohr aufweist, ansonsten aber identisch ausgebildet ist wie das Einsatzteil 150 und insbesondere auch einen Bypass-Kanal aufweist. Anstelle eines Abfuhrrohrs ist das Einsatzteil 250 an seiner Unterseite mit einer zur Behälterachse A koaxialen Einlassöffnung 251 versehen, die in den Innenraum des Einsatzteils 250 mündet, wobei wieder ein durchgehender Auslasskanal 253 zwischen der Einlassöffnung 251 und der seitlichen Austrittsöffnung 252 des Einsatzteils 250 gebildet ist. An der Aussenseite des Einsatzteils 250 ist wiederum ein durch die Behälterwand 102 begrenzter Strömungskanal 255 ausgebildet. Dieser beginnt unmittelbar beim Einlass 110 und windet sich etwa um den halben Umfang des Einsatzteils 250 herum schräg nach unten, bis er dann nahe der Behälterwand 102 in den Innenraum des Abscheidebehälters 100 ausmündet. Alle übrigen Teile des Schlammabscheiders sind gleich ausgebildet wie die entsprechenden Teile des Schlammabscheiders gemäss den Figuren 1-3 und sind deshalb auch mit denselben Bezugszeichen versehen.

Der Schlammabscheider der Fig. 5 ist im Prinzip gleich aufgebaut wie der Schlammabscheider der Fig. 4, unterscheidet sich von diesem aber im Wesentlichen durch eine vollständig zylindrische Form des Abscheidebehälters 200 und durch das Fehlen eines Zwischenbodens. Der Abscheidebehälter 200 umfasst einen Behälterboden 201 mit einem Ablassventil 230, eine Behälterseitenwand 202, einen Behälterdeckel 203, einen Einlass 210, einen Auslass 220 und ein (ohne Abfuhrrohr ausgestattetes) Einsatzteil 250 entsprechend dem Einsatzteil des Schlammabscheiders der Fig. 4. Bei dieser Ausführungsform des Schlammabscheiders setzt sich der Schlamm unmittelbar am Behälterboden 201 ab.

Ein Einsatzteil mit Abfuhrrohr wird vorzugsweise bei höheren Abscheidebehältern vorgesehen. Niedrigere, d.h. in Achsenrichtung kürzere und kompaktere Abscheidebehälter kommen ohne Abfuhrrohr aus.

Der Zwischenboden, auf dem sich die Feststoffpartikel absetzen, kann verschiedenartig ausgebildet sein. Die Figuren 9-12 zeigen vier Ausgestaltungen, die sich durch Form, Anzahl und Verteilung von peripheren Öffnungen bzw. Durchbrüchen unterscheiden. Beim Zwischenboden 140 gemäss Fig. 9 sind acht etwa keilförmige Öffnungen 141 gleichmässig über den Umfang des Zwischenbodens 140 verteilt. Beim Zwischenboden 240 der Fig. 10 sind eine keilförmige Öffnung 241 und eine bogenförmige Öffnung 242 nebeneinander angeordnet. Beim Zwischenboden 340 der Fig. 11 sind vier bogenförmige Öffnungen 342 gleichmässig über den Umfang verteilt angeordnet. Beim Zwischenboden 440 der Fig. 12 schliesslich sind zwei nebeneinander liegende keilförmige Öffnungen 441 vorgesehen. Anzahl und Form der Öffnungen können variieren, wobei Anordnungen mit unsymmetrischer Verteilung der Öffnungen vorteilhafter sind, weil dadurch im Raum unterhalb des Zwischenbodens eine Zyklon-Strömung verhindert wird.

Ein Zwischenboden ist nicht in jedem Fall erforderlich. So kann der Zwischenboden 140 auch bei den in den Figuren 1-4 dargestellten Ausführungsbeispielen des erfindungsgemässen Schlammabscheiders entfallen.

Für die Ausbildung einer hinsichtlich Abscheidungswirkung und möglichst geringem Druckverlust optimalen zyklonartigen Strömungsbewegung im Abscheidebehälter ist es wichtig, dass diverse Abmessungen des Abscheidebehälters passend aufeinander abgestimmt sind. Als Bezugsmass dient dabei die lichte Einlass-Weite dᵢₙ des Einlasses 110 bzw. 210. So sollte der Innendurchmesser d_{B} des Abscheidebehälters 100 bzw. 200 etwa 1,2 bis 3,0, vorzugsweise etwa 1,8 bis 2,6, mal so gross sein wie die lichte Einlass-Weite dᵢₙ. Der Innendurchmesser d_{B} des Abscheidebehälters wird dabei im Bereich unterhalb des Einsatzteils bzw. des Abfuhrrohrs gemessen, wie dies in den Figuren 2, 4 und 5 dargestellt ist. Ferner ist es wichtig, dass die Innenhöhe h_{B} des Abscheidebehälters etwa 2 bis 6, vorzugsweise etwa 3 bis 5, mal so gross ist wie die lichte Einlass-Weite dᵢₙ. Die Innenhöhe des Abscheidebehälters wird dabei bei Fehlen eines Zwischenbodens vom Behälterboden (Fig. 5) oder sonst vom Zwischenboden (Figuren 2 und 4) jeweils bis zum obersten Niveau O des Innenquerschnitts des Einlasses 110 bzw. 210 gemessen. Ein weiteres wichtiges Mass ist der Abstand h_{ab} zwischen dem Zwischenboden (sofern vorhanden) oder sonst dem Behälterboden von der Rückeintrittstelle der Flüssigkeit in die Strömungsumlenkmittel. Diese Rückeintrittstelle ist beim Ausführungsbeispiel der Figuren 1-3 die Eintrittsöffnung 151a des Abfuhrrohrs 151 des Einsatzteils 150 und bei den Ausführungsbeispielen der Figuren 4 und 5 die Eintrittsöffnung 251 des Einsatzteils 250. Der Abstand h_{ab} sollte mindestens so gross sein wie 2/3 der lichten Einlass-Weite dᵢₙ.

Die Erfindung wurde vorstehend anhand von Ausführungsbeispielen erläutert, soll jedoch nicht auf diese Ausführungsbeispiele beschränkt sein. Vielmehr sind für den Fachmann zahlreiche Modifikationen denkbar, ohne dabei von der Lehre der Erfindung abzuweichen. Der Schutzbereich wird daher durch die nachstehenden Patentansprüche definiert.

## Patentansprüche

1. Schlammabscheider mit einem eine seitliche Behälterwand (102; 202) und eine Behälterachse (A) aufweisenden Abscheidebehälter (100; 200) und einem Einlass (110; 210) zur Zufuhr von Flüssigkeit in den Abscheidebehälter und einem Auslass (120; 220) zur Abfuhr der Flüssigkeit aus dem Abscheidebehälter, wobei der Schlammabscheider so ausgebildet ist, dass in den Abscheidebehälter (100; 200) eingeführte Flüssigkeit in einer zyklonartigen Bewegung entlang der Behälterwand (102; 202) abwärts fliesst und dann innerhalb der zyklonartig abwärts fliessenden Flüssigkeit aufwärts zum Auslass (120; 220) strömt, wobei der Einlass (110; 210) und der Auslass (120; 220) an bezüglich der Behälterachse (A) diametral gegenüberliegenden Seiten des Abscheidebehälters (100; 200) angeordnet sind und wobei im Abscheidebehälter (100; 200) Strömungsumlenkmittel (150; 250) angeordnet sind, welche durch den Einlass (110; 210) in den Abscheidebehälter (100; 200) einströmende Flüssigkeit seitlich der Behälterwand (102; 202) entlang und schräg nach unten umlenken, **dadurch gekennzeichnet, dass** die Strömungsumlenkmittel (150; 250) einen Bypass-Kanal (157) aufweisen, durch den ein Teil der Flüssigkeit direkt vom Einlass (110; 210) zum Auslass (120; 220) fliessen kann.

2. Schlammabscheider nach Anspruch 1, **dadurch gekennzeichnet, dass** die Strömungsumlenkmittel (150; 250) einen Auslasskanal (153; 253) aufweisen, der einen achsnahen Bereich des Innenraums des Abscheidebehälters (100; 200) mit dem Auslass (120; 220) verbindet.

3. Schlammabscheider nach einem der vorangehenden Ansprüche, **dadurch gekennzeichnet, dass** die Strömungsumlenkmittel (150; 250) zusammen mit der Behälterwand (102; 202) einen Strömungskanal (155; 255) bilden, der sich vom Einlass (110; 210) weg schräg nach unten windet.

4. Schlammabscheider nach einem der vorangehenden Ansprüche, **dadurch gekennzeichnet, dass** die Strömungsumlenkmittel durch ein im Abscheidebehälter (100; 200) angeordnetes Einsatzteil (150; 250) gebildet sind.

5. Schlammabscheider nach einem der vorangehenden Ansprüche, **dadurch gekennzeichnet, dass** der Abscheidebehälter (100) in seinem unteren Bereich einen vorzugsweise strömungsberuhigten Schlammabsetzraum (105) aufweist.

6. Schlammabscheider nach Anspruch 5, **dadurch gekennzeichnet, dass** im Abscheidebehälter (100) unterhalb der Strömungsumlenkmittel (150) und oberhalb des Schlammabsetzraums (105) ein Zwischenboden (140; 240; 340; 440) mit mindestens einer peripheren Öffnung (141; 241, 242; 342; 441) angeordnet ist.

7. Schlammabscheider nach einem der vorangehenden Ansprüche, **dadurch gekennzeichnet, dass** die Strömungsumlenkmittel (150) ein zur Behälterachse (A) des Abscheidebehälters (100) im Wesentlichen koaxiales, mit dem Auslass (120) kommunizierendes Abfuhrrohr (151) aufweisen.

8. Schlammabscheider nach einem der vorangehenden Ansprüche, **dadurch gekennzeichnet, dass** der Innendurchmesser (d_{B}) des Abscheidebehälters (100; 200) 1,2 bis 3,0, vorzugsweise 1,8 bis 2,6, mal so gross ist wie die lichte Weite (dᵢₙ) des Einlasses (110; 210).

9. Schlammabscheider nach einem der vorangehenden Ansprüche, **dadurch gekennzeichnet, dass** der Abscheidebehälter (200) einen Behälterboden (201) aufweist und dass die vom Behälterboden (201) bis zum obersten Niveau (O) des Innenquerschnitts des Einlasses (210) gemessene Innenhöhe (h_{B}) des Abscheidebehälters (200) 2 bis 6, vorzugsweise 3 bis 5, mal so gross ist wie die lichte Weite (dᵢₙ) des Einlasses (210).

10. Schlammabscheider nach einem der vorangehenden Ansprüche, **dadurch gekennzeichnet, dass** der Abscheidebehälter (200) einen Behälterboden (201) aufweist und dass der Abstand (h_{ab}) zwischen dem Behälterboden (201) und den Strömungsumlenkmitteln (250) mindestens so gross ist wie 2/3 der lichten Weite (dᵢₙ) des Einlasses (210).

11. Schlammabscheider nach einem der Ansprüche 1-8, **dadurch gekennzeichnet, dass** der Abscheidebehälter (100) einen Zwischenboden (140; 240; 340; 440) aufweist und dass die vom Zwischenboden (140; 240; 340; 440) bis zum obersten Niveau (O) des Innenquerschnitts des Einlasses (110) gemessene Innenhöhe (h_{B}) des Abscheidebehälters (100) 2 bis 6, vorzugsweise 3 bis 5, mal so gross ist wie die lichte Weite (dᵢₙ) des Einlasses (110).

12. Schlammabscheider nach einem der Ansprüche 1-8 oder 11, **dadurch gekennzeichnet, dass** der Abscheidebehälter (100) einen Zwischenboden (140; 240; 340; 440) aufweist und dass der Abstand (h_{ab}) zwischen dem Zwischenboden (140; 240; 340; 440) und den Strömungsumlenkmitteln (150) mindestens so gross ist wie 2/3 der lichten Weite (dᵢₙ) des Einlasses (110).

## Claims

1. A sludge separator with a separation container (100; 200), which has a lateral container wall (102; 202) and a container axis (A), and an inlet (110; 210) for supplying liquid to the separation container and an outlet (120; 220) for discharging the liquid from the separation container, wherein the sludge separator is designed in such a way that liquid introduced into the separation container (100; 200) flows downwards in a cyclonic-like movement along the container wall (102; 202) and then, within the cyclonic-like manner downwardly flowing liquid, flows upwards to the outlet (120; 220), wherein the inlet (110; 210) and the outlet (120; 220) are arranged on diametrically opposite sides of the separation container (100; 200) with respect to the container axis (A), and wherein flow deflection means (150; 250) are arranged in the separation container (100; 200), which flow deflection means deflect liquid, which flows through the inlet (110; 210) into the separation container (100; 200), laterally along the container wall (102; 202) and obliquely downwards, **characterized in that** the flow deflection means (150; 250) have a bypass channel (157) through which a part of the liquid can flow directly from the inlet (110; 210) to the outlet (120; 220).

2. A sludge separator according to claim 1, **characterized in that**
the flow deflection means (150; 250) have an outlet channel (153; 253) connecting a near-axis region of the inner space of the separation container (100; 200) with the outlet (120; 220).

3. A sludge separator according to any one of the preceding claims, **characterized in that** the flow deflection means (150; 250), together with the container wall (102; 202), form a flow channel (155; 255) which winds obliquely downwards away from the inlet (110; 210).

4. A sludge separator according to any one of the preceding claims, **characterized in that** the flow deflection means are formed by an insert part (150; 250) arranged in the separation container (100; 200).

5. A sludge separator according to any one of the preceding claims, **characterized in that** the separation container (100), in its lower region, has a preferably flow-calmed sludge settling space (105).

6. A sludge separator according to claim 5, **characterized in that** an intermediate bottom (140; 240; 340; 440) with at least one peripheral opening (141; 241, 242; 342; 441) is arranged in the separation container (100) below the flow deflection means (150) and above the sludge settling space (105).

7. A sludge separator according to any one of the preceding claims, **characterized in that** the flow deflection means (150) have a discharge pipe (151) which is substantially coaxial with the container axis (A) of the separation container (100) and which communicates with the outlet (120).

8. A sludge separator according to any one of the preceding claims, **characterized in that** the internal diameter (d_{B}) of the separation container (100; 200) is 1.2 to 3.0, preferably 1.8 to 2.6, times as large as the clear width (dᵢₙ) of the inlet (110; 210).

9. A sludge separator according to any one of the preceding claims, **characterized in that** the separation container (200) has a container bottom (201) and that the internal height (h_{B}) of the separation container (200), which is measured from the container bottom (201) up to the uppermost level (O) of the internal cross section of the inlet (210), is 2 to 6, preferably 3 to 5, times as large as the clear width (dᵢₙ) of the inlet (210).

10. A sludge separator according to any one of the preceding claims, **characterized in that** the separation container (200) has a container bottom (201) and that the distance (h_{ab}) between the container bottom (201) and the flow deflection means (250) is at least as large as 2/3 of the clear width (dᵢₙ) of the inlet (210).

11. A sludge separator according to any one of claims 1-8, **characterized in that** the separation container (100) has an intermediate bottom (140; 240; 340; 440) and that the internal height (h_{B}) of the separation container (100), which is measured from the intermediate bottom (140; 240; 340; 440) up to the uppermost level (O) of the internal cross section of the inlet (110), is 2 to 6, preferably 3 to 5, times as large as the clear width (dᵢₙ) of the inlet (110).

12. A sludge separator according to any one of claims 1-8 or 11, **characterized in that** the separation container (100) has an intermediate bottom (140; 240; 340; 440) and that the distance (h_{ab}) between the intermediate bottom (140; 240; 340; 440) and the flow deflection means (150) is at least as large as 2/3 of the clear width (dᵢₙ) of the inlet (110).

## Revendications

1. Séparateur de boues avec un récipient de séparation (100; 200) ayant une paroi latérale de récipient (102; 202) et un axe de récipient (A) ainsi qu'une entrée (110; 210) pour fournir du liquide dans le récipient de séparation et une sortie (120; 220) pour décharger le liquide provenant du récipient de séparation, le séparateur de boues étant conçu de telle manière que le liquide introduit dans le récipient de séparation (100; 200) s'écoule vers le bas dans un mouvement cyclonique le long de la paroi du récipient (102; 202), et ensuite à l'intérieur du liquide s'écoulant de manière cyclonique vers le bas, s'écoule vers le haut à la sortie (120; 220), l'entrée (110; 210) et la sortie (120; 220) étant disposées à des côtés diamétralement opposés du récipient de séparation (100; 200) par rapport à l'axe du récipient (A), et des moyens de déviation d'écoulement (150; 250) étant agencés dans le récipient de séparation (100; 200), moyens de déviation qui font dériver le liquide s'écoulant à travers l'entrée (110; 210) dans le récipient de séparation (100; 200) latéralement le long de la paroi du conteneur (102; 202) et obliquement vers le bas, **caractérisé en ce que** les moyens de déviation d'écoulement (150; 250) présentent un canal de dérivation (157) à travers lequel une partie du liquide peut s'écouler directement de l'entrée (110; 210) à la sortie (120; 220).

2. Séparateur de boues selon la revendication 1, **caractérisé en ce que** les moyens de déviation d'écoulement (150; 250) présentent un canal de sortie (153; 253) qui relie une zone axialement proche de l'axe de l'intérieur du récipient de séparation (100; 200) avec la sortie (120; 220).

3. Séparateur de boues selon l'une des revendications précédentes, **caractérisé en ce que** les moyens de déviation d'écoulement (150; 250) forment avec la paroi du réservoir (102; 202) un canal d'écoulement (155; 255) qui s'enroule obliquement vers le bas à l'écart de l'entrée (110; 210).

4. Séparateur de boues selon l'une des revendications précédentes, **caractérisé en ce que** les moyens de déviation d'écoulement sont formés par une pièce d'insertion (150; 250) disposée dans le récipient de séparation (100; 200).

5. Séparateur de boues selon l'une des revendications précédentes, **caractérisé en ce que** dans sa zone inférieure, le réservoir de séparation (100) présente un espace décanteur de boues (105) de préférence à écoulement calmé.

6. Séparateur de boues selon la revendication 5, **caractérisé en ce que** dans le réservoir de séparation (100) au-dessous des moyens de déviation d'écoulement (150) et au-dessus de l'espace décanteur de boues (105) est disposé un plancher intermédiaire (140; 240; 340; 440) avec au moins une ouverture périphérique (141; 241, 242; 342; 441).

7. Séparateur de boues selon l'une des revendications précédentes, **caractérisé en ce que** les moyens de déviation d'écoulement (150) comportent un tuyau d'évacuation (151) qui est essentiellement coaxial à l'axe du récipient (A) du récipient de séparation (100) et en communication avec la sortie (120).

8. Séparateur de boues selon l'une des revendications précédentes, **caractérisé en ce que** le diamètre intérieur (d_{B}) du récipient de séparation (100; 200) est de 1,2 à 3,0, de préférence de 1,8 à 2,6, fois supérieur à la largeur libre (dᵢₙ) de l'entrée (110; 210).

9. Séparateur de boues selon l'une des revendications précédentes, **caractérisé en ce que** le récipient de séparation (200) présente un fond de récipient (201), et **en ce que** la hauteur intérieure (h_{B}) du récipient de séparation (200), mesurée à partir de la base du récipient (201) jusqu'au niveau supérieur (O) de la section intérieure de l'entrée (210), est de 2 à 6, de préférence de 3 à 5, fois supérieure à la largeur libre (dᵢₙ) de l'entrée (210).

10. Séparateur de boues selon l'une des revendications précédentes, **caractérisé en ce que** le récipient de séparation (200) présente un fond de récipient (201), et **en ce que** la distance (h_{ab}) entre le fond du réservoir (201) et les moyens de déviation d'écoulement (250) est au moins aussi grande que 2/3 du largeur libre (dᵢₙ) de l'entrée (210).

11. Séparateur de boues selon l'une des revendications 1 à 8, **caractérisé en ce que** le récipient de séparation (100) présente un plancher intermédiaire (140; 240; 340; 440), et **en ce que** la hauteur intérieure (h_{B}) du récipient de séparation (100), mesurée à partir du plancher intermédiaire (140; 240; 340; 440) jusqu'au niveau supérieur (O) de la section transversale intérieure de l'entrée (110), est de 2 à 6, de préférence de 3 à 5 fois supérieure à la largeur libre (dᵢₙ) de l'entrée (110).

12. Séparateur de boues selon l'une des revendications 1 à 8 ou 11, **caractérisé en ce que** le récipient de séparation (100) présente un plancher intermédiaire (140; 240; 340; 440), et **en ce que** la distance (h_{ab}) entre le plancher intermédiaire (140; 240; 340; 440) et les moyens de déviation d'écoulement (150) est au moins aussi grande que 2/3 de la largeur libre (dᵢₙ) de l'entrée (110).
